# EUROPEAN PATENT SPECIFICATION

(11) **EP 1 293 876 B1**
(45) Date of publication and mention of the grant of the patent: **04.08.2004**
(21) Application number: 01830581.3
(22) Date of filing: 13.09.2001
(51) Int. Cl.: G06F 1/16

(54) **A modular data processing system**
Modulares Datenverarbeitungssystem
Système de traitement d'informations modulaires

(43) Date of publication of application: 19.03.2003
(73) Proprietor: STMicroelectronics S.r.l., 20041 Agrate Brianza (Milano) (IT)
(72) Inventor: Pappalardo, Francesco, 95047 Paterno (CT) (IT); Mantellassi, Luigi, 01210 Ornex (FR)
(74) Representative: Pezzoli, Ennio

(56) References cited:
- EP-A- 0 795 810
- US-A- 6 047 572
- US-B1- 6 169 655

## Description

The present invention relates to a modular data processing system.

Several types of data processing systems have been proposed by computer manufacturers in the last years. For example, Personal Computers (PCs) are become more and more popular since they first appeared in the late 1970s.

A personal computer consists of a small, relatively inexpensive single-user system that is based on microprocessor technology; personal computers are designed for an individual use, and are commonly employed for running word processors, spreadsheets, and data base applications. Today, personal computers are divided between desktops and notebooks. Desktops are used at the office or at home, and are designed to fit comfortably on top of a desk; notebooks are portable computers, which are extremely lightweight and are small enough to fit easily in a briefcase.

Hand-held computers, also known as palmtops, pocket computers or Personal Digital Assistants (PDAs), have been also attained a widespread diffusion in the last years. A hand-held computer consists of a very small system, which literally fits in one hand. Hand-held computers are very practical for certain functions, such as phone books and calendars.

Several devices have been proposed for facilitating the use of the portable computers. For example, document EP-A-0795810 discloses a stand allowing a hand-held computer to be propped up for the user's convenience to view the display. Document US-A-6047572 relates to security measures for preventing theft of portable computers and docking stations. Moreover, document US-A-6169655 discloses a system for docking a portable computer within a drawer of the desk.

Although extremely convenient to carry, hand-held computers have not replaced personal computers because of their limited equipment. Particularly, a hand-held computer has a very small screen and keyboard, which is often replaced with an electronic pen; moreover, the hand-held computers do not include disk drivers.

As a consequence, a user of the hand-held computer must always own a personal computer as well. This involves frequent exchanges of information between the hand-held computer and the personal computer; moreover, any duplication of information on the two systems requires their synchronising.

A solution known in the art for accomplish this interchange of information consists of using a passive interface, which connects the hand-held computer to the personal computer. The passive interface allows information to be downloaded from the hard-disk of the personal computer to the hand-held computer; moreover, any updating carried out on the hand-held computer may be replicated on the personal computer.

A drawback of the scenario described above is that it involves the proliferation of a large number of different devices, with a negative economic impact on the user. Moreover, the interchange of information between the hand-held computer and the personal computer is time consuming and particularly annoying for the user.

It is an object of the present invention to overcome the above-mentioned drawbacks. In order to achieve this object, a modular data processing system as set out in the first claim is proposed.

Briefly, the present invention provides a modular data processing system including a hand-held computer, an expansion device, and means for coupling the hand-held computer to the expansion device in a removable manner, wherein the expansion device embeds at least one internal peripheral without any controller, and the hand-held computer embeds control circuitry including a plurality of controllers for the at least one internal peripheral and processing circuitry coupled to the control circuitry, in a mobile operative condition in which the hand-held computer is not coupled to the expansion device the processing circuitry controlling operation of the hand-held computer and in an expanded operative condition in which the hand-held computer is coupled to the expansion device the processing circuitry controlling operation of a personal computer having a central unit formed by the hand-held computer and the expansion device.

Moreover, the present invention also provides a hand-held computer and an expansion device for use in the modular data processing system.

Further features and the advantages of the solution according to the present invention will be made clear by the following description of a preferred embodiment thereof, given purely by way of a non-restrictive indication, with reference to the attached figures, in which:
Fig.1 is a pictorial representation of a modular data processing system; and
Fig.2 shows a schematic block diagram of a hand-held computer of the system.

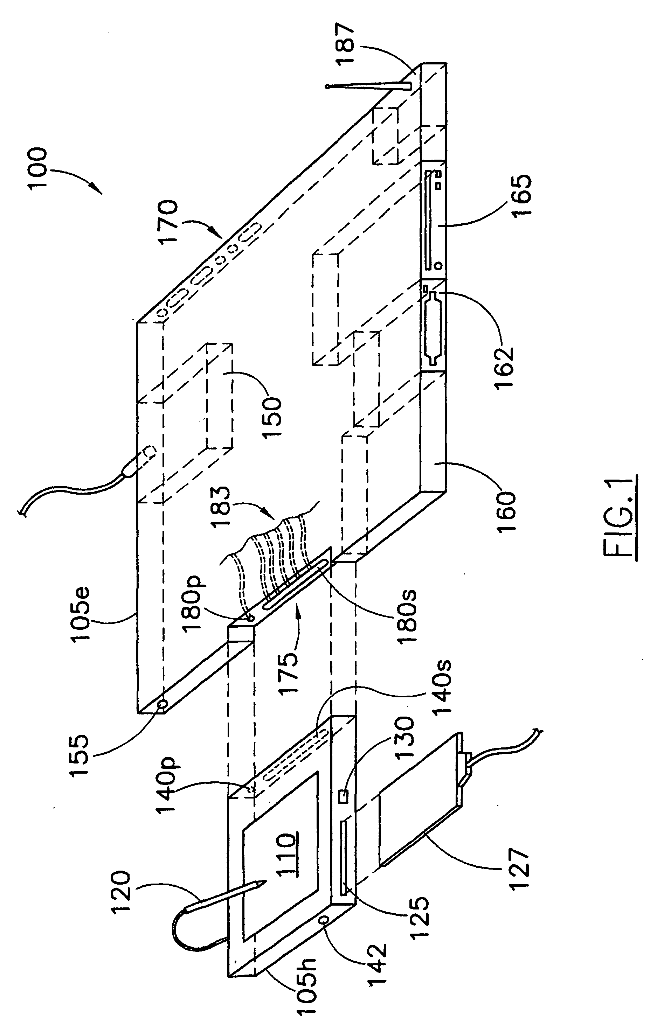

With reference in particular to Fig.1, a modular data processing system 100 is formed by a hand-held computer 105h and an expansion device 105e. The hand-held computer 105h includes a flat panel screen 110; typically, the screen 110 is of the active-matrix type and employs a TFT technology. An electronic pen (or stylus) 120 is used to input commands and hand-written characters to the hand-held computer 105h. A slot 125 conforming to the PCMCIA standard is provided on a right side of the hand-held computer 105h. A PCMCIA modem card 127, consisting of a small, credit card-sized device, is inserted into the slot 125; the modem card 127 is used to connect the hand-held computer 105h to a telephone network (thorough a mobile telephone, not shown in the figure). A port 130, for example conforming to the IrDA standard, allows exchange of information with the outside via infrared light waves. A female signal connector 140s and a female power connector 140p are arranged on a rear side of the hand-held computer 105h. The hand-held computer 105h is turned on and off by acting on a switch 142, which is placed on its front side.

The expansion device 105e embeds a power supply unit 150, which is plugged into standard electrical outlets; the power supply unit 150 converts AC current to DC current, and regulates voltage to eliminate spikes and surges. The expansion device 105e is turned on and off by acting on a switch 155 placed on its front side. Internal peripheral devices (or integrated peripherals) consisting of a hard-disk 160, a floppy-disk drive 162 and a CD-ROM drive 165 are embedded in the expansion device 105e. The internal peripherals 160-165 are formed by the mechanical parts of the devices (such as electric motors, reading/writing heads, disk-ejecting systems, and the like); however, the internal peripherals 160-165 are without any controller. In other words, the internal peripherals 160-165 do not include electronic circuitry for managing the flow of data to and from the devices.

A series of expansion ports 170 are arranged on a rear side of the expansion device 105e. The ports 170 are used to connect external peripherals to the expansion device 105e; for example, serial ports are used to connect a keyboard and a mouse, a CRT port is used to connect a monitor, a parallel port is used to connect a printer, a USB port is used to connect a scanner, and so on.

A housing 175 for receiving a rear portion of the hand-held computer 105h is provided on the front side of the expansion device 105e. A male signal connector 180s and a male power connector 180p (matching the connectors 140s and 140p, respectively, of the hand-held computer 105h) are arranged on a bottom side of the housing 175. A series of flexible cables 183 are plugged into the connectors 180s and 180p. Particularly, each internal peripheral 160-165 and each port 170 is connected to a distinct section of the signal connector 180s through a corresponding cable 183; an additional cable 183 is used to connect the power supply unit 150 to the power connector 180p. A transceiver 187 (with a respective aerial) is further coupled to the signal connector 180s; the transceiver 187 (for example of the GSM type) is used to access the internal peripherals 160-165 and the ports 170 remotely through a telephone connection to the expansion device 105e.

Whenever the hand-held computer 105h must be coupled to the expansion device 105e, its rear portion slips into the housing 175 until the (female) connectors 140s,140p plug into the (male) connectors 180s,180p. The assembly so obtained operates as a central unit of a personal computer (as described in the following). The hand-held computer 105h is removed from the expansion device 105e by grasping its projecting portion, and then extracting its rear portion from the housing 175.

Similar considerations apply if the hand-held computer has a different structure (for example with a touch-screen, a small keyboard or a voice recognition unit), if the PCMCIA modem and the transceiver are replaced by equivalent remote communication units (such as integrating a transceiver of the mobile telephone in the PCMCIA modem, or exploiting a telephone network of the GPRS or UMTS type), if the expansion device has a different structure (for example embedding a small keyboard and a flat-panel monitor like in a notebook), if an equivalent structure is envisaged for coupling the hand-held computer to the expansion device in a removable manner (for example exploiting a wireless connection, and particularly conforming to the BlueTooth standard), if the expansion device embeds a different number or type of internal peripherals (such as a DVD drive), if different types of ports are envisaged (such as a TV port), if the internal peripherals and the ports are linked to the signal connector in a different manner, and so on.

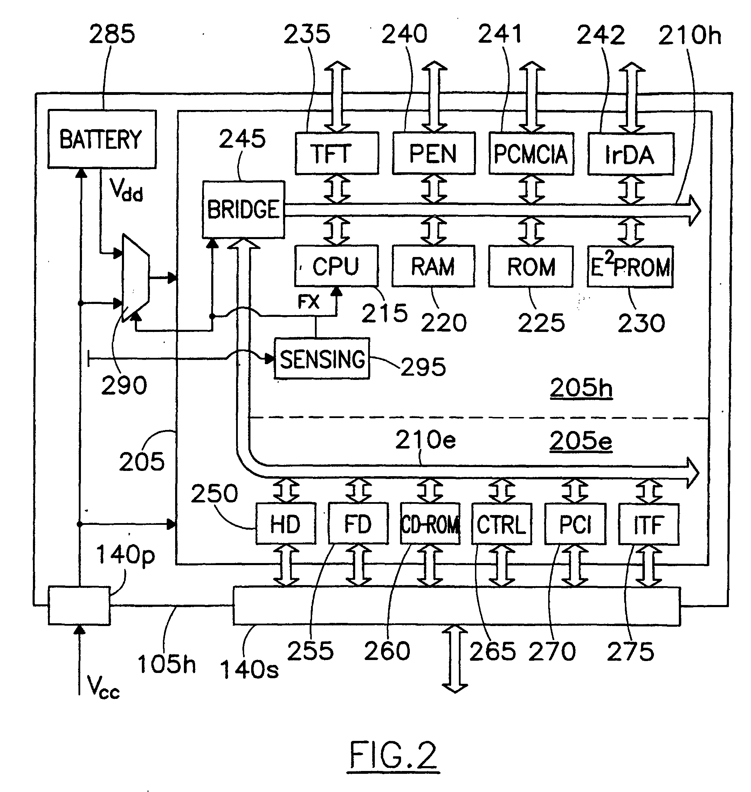

Considering now Fig.2, the hand-held computer 105h embeds a System On Chip (SoC) 205; the system on chip 205 consists of a series of units making up an entire electronic system, which are integrated on a single chip of semiconductor material. The system on chip 205 is partitioned into two sections 205h and 205e, which are supplied one independently of the other.

The section 205h includes several units that are connected in parallel to a communication bus 210h. In detail, a CPU 215 controls operation of the whole system, a RAM 220 is used as a working memory by the CPU 215, and a ROM 225 stores basic code for the bootstrap of the system. A non-volatile memory 230, typically consisting of a flash E²PROM, operates as a solid-state mass memory for the hand-held computer 105h; the section 205h further includes a controller 235 for the TFT screen, a controller 240 for the electronic pen, an interface 241 for the PCMCIA slot, and a controller 242 for the infrared port (of the hand-held computer).

A bridge 245 couples the bus 210h to an additional communication bus 210e, which is formed in the section 205e. Further units are connected in parallel to the bus 210e. In detail, the section 205e includes a controller 250 for the hard-disk, a controller 255 for the floppy-disk drive, and a controller 260 for the CD-ROM drive (of the expansion device). A series of controllers 265 for standard external peripherals commonly employed in the personal computer (such as the monitor, the keyboard and the mouse) are further embedded in the section 205e. In addition, the section 205e includes a controller 270 for an external bus (for example of the PCI type), which is used to connect further external peripherals to the personal computer (such asthe printer and the scanner), and a series of interfaces 275 for the ports of the expansion device. Each one of the units 250-275 interfaces with a corresponding section of the signal connector 140s.

The units of the section 205h provide all the functionality of the motherboard's chipset of the hand-held computer 105h. On the other hand, the units of the section 205h together with the units of the section 205e provide the functionality of the motherboard's chipset of the personal computer.

The connector 140p (when the hand-held computer is coupled to the expansion device) receives an external power supply voltage Vcc, which is derived from an external feeder connected to the expansion device. The voltage Vcc is used to recharge a battery pack 285, which enables the hand-held computer to run without plugging it in. The battery 285 provides an internal power supply voltage Vdd.

The power supply voltage Vcc is fed to the section 205e directly. The power supply voltages Vcc and Vdd are input to distinct terminals of a multiplexer 290 (supplied by the voltage Vdd). The multiplexer 290 selectively transmits one of the two power supply voltages, which is fed to the section 205h. A sensing circuit 295 detects the power supply voltage Vcc and outputs a signal FX indicative of its presence. The signal FX is supplied to the CPU 215, to the bridge 245, and to a control terminal of the multiplexer 290.

When the hand-held computer is not coupled to the expansion device (mobile condition), the section 205e is not supplied and it is then disabled. As soon as the hand-held computer is turned on, the battery 285 supplies the multiplexer 290, which transmits the voltage Vdd to the section 205h as a default. The sensing circuit 295 does not detect the power supply voltage Vcc, so that the signal FX is deasserted. In response thereto, the multiplexer 290 continues to supply the voltage Vdd to the section 205h. Moreover, the bridge 245 is disabled and its logic gates interfacing the bus 210e (for example of the tri-state type) are set to a high-impedance state. At the same type, the CPU 215 is configured to control operation of the hand-held computer (for example directing output to the TFT controller 235, receiving input from the pen controller 240, and storing information onto and retrieving information from the flash memory 230). The CPU 215 than starts a bootstrap of the system that involves loading of a complete operating system (for the personal computer), together with software modules specific for operation of the hand-held computer 105h (such as a handwriting recognition feature and a power management routine); however, functionalities of the operating system that are not used by the hand-held computer 105h are disabled.

Conversely, when the hand-held computer 105h is coupled to the expansion device (expanded condition), the section 205e is supplied by the voltage Vcc and it is then enabled (upon turning on the expansion device). The sensing circuit 295 detects the power supply voltage Vcc, so that the signal FX is asserted. In response thereto, the multiplexer 290 transmits the power supply voltage Vcc to the section 205h as well. Moreover, the bridge 245 is enabled to exchange information with the bus 210e and the CPU 215 is configured to control operation of the personal computer (for example disabling the TFT controller 235 and the pen controller 240, and exchanging information with the units connected to the bus 210e). The CPU 215 then enables the complete operating system and disables the software modules specific for the hand-held computer 105h. In this way, cooperation of the system on chip 205 with the internal and external peripherals of the expansion device provides the complete functionality of a personal computer.

The hand-held computer 105h shows an analogous behaviour when it is not coupled to the expansion device, but it is nevertheless connected to a power supply (not shown in the figure) providing the same voltage Vcc. The section 205h and the section 205e are likewise supplied by the voltage Vcc; moreover, the bridge 245 is enabled and the CPU 215 is configured to control operation of the personal computer. If the hand-held computer 105h is then remotely coupled to the expansion device through the telephone network (using the modem card inserted into the PCMCIA slot, with the respective mobile telephone, and the transceiver of the expansion device), even in this case the system on chip 205 may cooperate with the internal and external peripherals of the expansion device providing the complete functionality of a personal computer.

Similar considerations apply if the hand-held computer has a different architecture, if the system on chip includes equivalent processing circuitry and control circuitry (such as interfaces for mass storage devices conforming to the IDE standard, in which the controller is integrated into the device), if the bridge or the multiplexer are replaced by equivalent components, if the logic gates of the bridge are of the open-drive type, if the multiplexer is integrated in the system on chip, and the like. Alternatively, the screen and the electronic pen of the hand-held computer are used even when the hand-held computer is coupled to the expansion device, or two different operating systems are loaded in the mobile and expanded conditions, respectively.

More generally, the present invention provides a modular data processing system. The system includes a hand-held computer and an expansion device; means are provided for coupling the hand-held computer to the expansion device in a removable manner. The expansion device embeds one or more internal peripherals that are without any controller; in addition, the expansion device may further embed one or more ports for external peripherals. The hand-held computer embeds control circuitry including a plurality of controllers for the peripherals and processing circuitry coupled to the control circuitry. In a mobile operative condition in which the hand-held computer is not coupled to the expansion device, the processing circuitry controls operation of the hand-held computer; in an expanded operative condition in which the hand-held computer is coupled to the expansion device, the processing circuitry controls operation of a personal computer having a central unit formed by the hand-held computer and the expansion device.

The proposed solution removes the need for a user to own both a hand-held computer and a personal computer at the same time. The innovative vision of the invention provides a modular data processing system of a semi-portable type. The hand-held computer integrates the electronic circuits that are used by both the hand-held computer and the personal computer; the hand-held computer excludes only the mechanical parts of the internal peripherals used by the personal computer. This feature strongly reduces the system complexity and cost. On the other hand, the expansion device makes it possible to connect both the internal and the external peripherals of the personal computer to the hand-held computer in a very simple manner. Moreover, this architecture allows the functionality of the hand-held computer to be readily expanded by embedding new peripherals, which may use controllers already available in the hand-held computer.

The envisaged system further avoids any duplication of information on the hand-held computer and the personal computer, since the latter may access the information stored on the solid-state mass memory of the hand-held computer directly. Therefore, operation of the whole system is strongly simplified.

The preferred embodiment of the invention described above offers further advantages. For example, the processing circuitry and the control circuitry are integrated in a single chip.

This architecture reduces the number of discrete components and then the size of the hand-held computer; moreover, it strongly increases the system reliability.

Advantageously, the control circuitry may be selectively disabled.

Therefore, the control circuitry does not interfere with the operation of the hand-held computer when it is not necessary (i.e., when the hand-held computer is not coupled to the expansion device).

Preferably, the hand-held computer employs two different power supply voltages, an internal one provided by a battery and an external one received from the outside. The external power supply voltage feeds both the processing circuitry and the control circuitry when it is available; otherwise, the processing circuitry is fed by the internal power supply and the control circuitry is not fed.

The envisaged solution efficiently directs battery power to the different components of the hand-held computer; as a consequence, the lifetime of the battery is strongly increased.

Particularly, the external power supply is derived from an external feeder connected to the expansion device, and it is then provided to the hand-held computer.

In this way, the expansion device operates as an active interface for the hand-held computer; the same power supply unit necessary for operation of the internal peripherals is then also used for feeding the hand-held computer when it is coupled to the expansion device.

Alternatively, a different system for disabling the control circuitry is used (for example responsive to the turn on of the hand-held computer), or the hand-held computer employs a different power supply scheme; for example, the control circuitry may be fed by the internal power supply as well, in order to allow the hand-held computer to be remotely coupled to the expansion device even without any external power supply. However, the solution according to the present invention leads itself to be implemented even with the processing circuitry and the control circuitry that are integrated in two or more chips, and with the control circuitry that is always enabled.

Advantageously, the architecture of both the processing circuitry and the control circuitry is based on a respective communication bus; a bridge is used to connect the two buses to each other.

The proposed structure is particularly effective; in addition, any electrical load on the bus of the processing circuitry may be avoided in a very simple manner when the control circuitry is disabled.

Moreover, the hand-held computer is preferably coupled to the expansion device through a single connector, which is used to transmit information between the control circuitry and the expansion device; multiple connectors are then employed for distributing the information to and collecting the information from the peripherals.

This feature makes the connection of the hand-held computer to the expansion device and its removal very simple.

In a particular embodiment of the present invention, the hand-held computer may also be remotely coupled to the expansion device.

In this way, the user of the hand-held computer is allowed to exploit the functionality of his/her personal computer even when not at the office or at home (of course, with a higher response time for accessing the remote peripherals).

Alternatively, the processing circuitry and/or the control circuitry have a different architecture (for example with a single bus), the hand-held computer is coupled to the expansion device with two or more connectors, or the hand-held computer may be coupled to the expansion device only locally.

Moreover, it should be noted that either the hand-held computer or the expansion device are suitable to be implemented and put on the market as stand-alone products, which are then combined in the modular data processing system of the invention.

Naturally, in order to satisfy local and specific requirements, a person skilled in the art may apply to the solution described above many modifications and alterations.

## Claims

1. A modular data processing system (100) including a hand-held computer (105h), an expansion device (105e), and means (140s,140p,180s,180p) for coupling the hand-held computer to the expansion device in a removable manner,
**characterised in that**
the expansion device (105e) embeds at least one internal peripheral (160-165) without any controller, and the hand-held computer embeds control circuitry (205e) including a plurality of controllers (250-260) for the at least one internal peripheral and processing circuitry (205h) coupled to the control circuitry, in a mobile operative condition in which the hand-held computer is not coupled to the expansion device the processing circuitry controlling operation of the hand-held computer and in an expanded operative condition in which the hand-held computer is coupled to the expansion device the processing circuitry controlling operation of a personal computer having a central unit formed by the hand-held computer and the expansion device.

2. The modular data processing system (100) according to claim 1, wherein the processing circuitry (205h) and the control circuitry (205e) are integrated in a single chip of semiconductor material (205).

3. The modular data processing system (100) according to claim 1 or 2, wherein the hand-held computer (105h) further includes means for selectively disabling the control circuitry (205e).

4. The modular data processing system (100) according to claim 3, wherein the hand-held computer (105h) further includes a battery (285) for providing an internal power supply (Vdd) and means for receiving an external power supply (Vcc), when the external power supply is received the processing circuitry (205h) and the control circuitry (205e) being fed by the external power supply and when the external power supply is not received the processing circuitry (205h) being fed by the internal power supply and the control circuitry (205e) being not fed.

5. The modular data processing system (100) according to claim 4, wherein the expansion device (105e) further includes means (150) for deriving the external power supply (Vcc) from an external feeder and the system further includes means (140p,180p) for transmitting the external power supply from the expansion device to the hand-held computer in the expanded condition.

6. The modular data processing system (100) according to any claim from 1 to 5, wherein the processing circuitry (205h) includes a plurality of first units (215-242) connected to a first communication bus (210h) and the control circuitry (205e) includes a plurality of second units (250-275) connected to a second communication bus (210e), the hand-held computer (105h) further including means (245) for bridging between the first communication bus and the second communication bus.

7. The modular data processing system (100) according to any claim from 1 to 6, wherein the means (140s,140p,180s,180p) for coupling the hand-held computer (105h) to the expansion device (105e) includes a single first connector (140s) for transmitting information between the control circuitry (205e) and the expansion device (105e) and a plurality of second connectors (183) each one for transmitting the information between the first connector and a corresponding internal peripheral (160-165).

8. The modular data processing system (100) according to any claim from 1 to 7, wherein the means (140s,140p,180s,180p) for coupling the hand-held computer (105h) to the expansion device (105e) includes remote communication units (125,127).

9. A hand-held computer (105h) for use in a modular data processing system (100) including means (140s,140p,180s,180p) for coupling the hand-held computer to an expansion device (105e) in a removable manner, the expansion device embedding at least one internal peripheral (160-165) without any controller, wherein the hand-held computer embeds control circuitry (205e) including a plurality of controllers (250-260) for the at least one internal peripheral and processing circuitry (205h) coupled to the control circuitry, in a mobile operative condition in which the hand-held computer is not coupled to the expansion device the processing circuitry controlling operation of the hand-held computer and in an expanded operative condition in which the hand-held computer is coupled to the expansion device the processing circuitry controlling operation of a personal computer having a central unit formed by the hand-held computer and the expansion device.

10. An expansion device (105e) for use in a modular data processing system (100) embedding at least one internal peripheral (160-165) without any controller, and including means (140s,140p,180s,180p) for coupling a hand-held computer (105h) to the expansion device in a removable manner, wherein the hand-held computer embeds control circuitry (205e) including a plurality of controllers (250-260) for the at least one internal peripheral and processing circuitry (205h) coupled to the control circuitry, in a mobile operative condition in which the hand-held computer is not coupled to the expansion device the processing circuitry controlling operation of the hand-held computer and in an expanded operative condition in which the hand-held computer is coupled to the expansion device the processing circuitry controlling operation of a personal computer having a central unit formed by the hand-held computer and the expansion device.

## Patentansprüche

1. Modulares Datenverarbeitungssystem (100), enthaltend einen tragbaren Rechner (105h), ein Erweiterungsteil (105e) und eine Einrichtung (140s, 140p, 180s, 180p) zum lösbaren Ankoppeln des tragbaren Rechners an das Erweiterungsteil,
**dadurch gekennzeichnet, dass** das Erweiterungsteil (105e) mindestens ein internes Peripherieteil (160-165) ohne irgendeine Steuerung beinhaltet, und der tragbare Rechner eine Steuerschaltung (205e) beinhaltet, die mehrere Steuerungen (250-260) für das mindestens eine interne Peripherieteil und eine Verarbeitungsschaltung (205h) enthält, die an die Steuerschaltung gekoppelt ist, wobei in einem Mobilbetriebszustand, in welchem der tragbare Rechner nicht mit dem Erweiterungsteil gekoppelt ist, die Verarbeitungsschaltung den Betrieb des tragbaren Rechners steuert, und in einem erweiterten Betriebszustand, in welchem der tragbare Rechner mit dem Erweiterungsteil gekoppelt ist, die Verarbeitungsschaltung den Betrieb eines Personal-Computer mit einer von dem tragbaren Rechner und dem Erweiterungsteil gebildeten Zentraleinheit steuert.

2. System (100) nach Anspruch 1, bei dem die Verarbeitungsschaltung (205h) und die Steuerschaltung (205e) auf einem einzigen Chip aus Halbleitermaterial (205) integriert sind.

3. System (100) nach Anspruch 1 oder 2, bei dem der tragbare Rechner (105h) weiterhin eine Einrichtung zum selektiven Sperren der Steuerschaltung (204e) besitzt.

4. System (100) nach Anspruch 3, bei dem der tragbare Rechner (105a) außerdem aufweist: eine Batterie (285) zum Bereitstellen einer internen Energieversorgung (Vdd) und eine Einrichtung zum Empfangen einer externen Energieversorgung (Vcc), wobei, wenn die externe Energieversorgung empfangen wird, die Verarbeitungsschaltung (205h) und die Steuerschaltung (205e) von der externen Energieversorgung gespeist wird, und dann, wenn die externe Energieversorgung nicht empfangen wird, die Verarbeitungsschaltung (205h) von der internen Energieversorgungs gespeist wird, die Steuerschaltung (205e) hingegen nicht gespeist wird.

5. System (100) nach Anspruch 4, bei dem das Erweitungsteil (105e) weiterhin aufweist: eine Einrichtung (150) zum Ableiten der externen Energieversorgung (Vcc) von einer externen Quelle, wobei das System außerdem eine Einrichtung (140p, 180p) aufweist, um die externe Energieversorgung von dem Erweiterungsteil im Erweiterungszustand an den tragbaren Rechner zu übertragen.

6. System (100) nach einem der Ansprüche 1 bis 5, bei dem die Verarbeitungsschaltung (205h) mehrere erste Einheiten (215-242) aufweist, die an einen ersten Übertragungsbus (210h) angeschlossen sind, und die Steuerschaltung (205e) mehrere zweite Einheiten (250-275) aufweist, die an einen zweiten Übertragungsbus (210e) angeschlossen sind, wobei der tragbare Rechner weiterhin eine Einrichtung (245) zum Überbrücken des ersten und des zweiten Übertragungsbusses aufweist.

7. System (100) nach einem der Ansprüche 1 bis 6, bei dem die Einrichtung (140s, 140p, 180s, 180p) zum Koppeln des tragbaren Rechners (105h) mit dem Erweiterungsteil (105e) einen ersten Einzelverbinder (140s) zum Übertragen von Informationen zwischen der Steuerschaltung (205e) und dem Erweiterungsteil (105e) und mehrere zweite Verbinder (163), jeweils einer zum Übertragen von Information zwischen dem ersten Verbinder und einem entsprechenden internen Peripheriegerät (160-165) aufweist.

8. System (100) nach einem der Ansprüche 1 bis 7, bei dem die Einrichtung (140s, 140p, 180s, 180p) zum Koppeln des tragbaren Rechners (105h) mit der Erweiterungseinrichtung (105e) Fernübertragungseinheiten (125, 127) aufweist.

9. Tragbarer Rechner (105h) zur Verwendung in einem modularen Datenverarbeitungssystem (100) mit einer Einrichtung (140s, 140p, 180s, 180p) zum lösbaren Koppeln des tragbaren Rechners mit einem Erweiterungsteil (105e), welches mindestens ein internes Peripheriegerät (160-165) ohne jegliche Steuerung einbettet, wobei der tragbare Rechner eine Steuerschaltung (105e) beinhaltet, welche mehrere Steuerungen (250-260) für das mindestens eine interne Peripheriegerät und eine mit der Steuerschaltung gekoppelte Verarbeitungsschaltung (205h) aufweist, wobei im mobilen Betriebszustand, in welchem der tragbare Rechner nicht mit dem Erweiterungsteil gekoppelt ist, die Verarbeitungsschaltung des Betriebs des tragbaren Rechners steuert, und im erweiterten Betriebszustand, in welchem der tragbare Rechner mit dem Erweiterungsteil gekoppelt ist, die Verarbeitungsschaltung den Betrieb eines Personal-Computers mit einer Zentraleinheit, welcher durch den tragbaren Rechner und die Erweiterungseinheit gebildet wird, steuert.

10. Erweiterungsteil (105e) zur Verwendung in einem modularen Datenverarbeitungssystem (100), beinhaltend zumindest ein internes Peripheriegerät (160-165) ohne jegliche Steuerung, und enthaltend eine Einrichtung (140s, 140p, 180s, 180p) zum lösbaren Koppeln eines tragbaren Rechners (105h) mit dem Erweiterungsteil, wobei der tragbare Rechner eine Steuerschaltung (205e) mit mehreren Steuerungen (250-260) für das mindestens eine interne Peripheriegerät und eine Verarbeitungsschaltung (205h), die an die Steuerschaltung gekoppelt ist, aufweist, wobei in einem mobilen Betriebszustand, in welchem der tragbare Rechner nicht mit dem Erweiterungsteil gekoppelt ist, die Verarbeitungsschaltung den Betrieb des tragbaren Rechners steuert, und im erweiterten Betriebszustand, in welchem der tragbare Rechner mit dem Erweiterungsteil gekoppelt ist, die Verarbeitungsschaltung den Betrieb eines Personal-Computers mit einer Zentraleinheit steuert, gebildet durch den tragbaren Rechner und das Erweiterungsteil.

## Revendications

1. Système modulaire de traitement de données (100) comprenant un ordinateur de poche (105h), un dispositif d'extension (105e), et des moyens (140s, 140p, 180s, 180p) pour coupler l'ordinateur de poche au dispositif d'extension de façon amovible,
**caractérisé en ce que** le dispositif d'extension (105e) contient au moins un périphérique interne (160-165) sans aucun contrôleur et l'ordinateur de poche contient un circuit de commande (205e) comprenant une pluralité de contrôleurs (250-260) pour ledit au moins un périphérique interne et un circuit de traitement (205h) couplé au circuit de commande, dans un état de fonctionnement mobile dans lequel l'ordinateur de poche n'est pas couplé au dispositif d'extension, le circuit de traitement commandant le fonctionnement de l'ordinateur de poche et, dans un état de fonctionnement étendu dans lequel l'ordinateur de poche est couplé au dispositif d'extension, le circuit de traitement commandant le fonctionnement d'un ordinateur personnel ayant une unité centrale formée par l'ordinateur de poche et le dispositif d'extension.

2. Système modulaire de traitement de données (100) selon la revendication 1, dans lequel le circuit de traitement (205h) et le circuit de commande (205e) sont intégrés dans une seule puce de matériau semiconducteur (205).

3. Système modulaire de traitement de données (100) selon la revendication 1 ou 2, dans lequel l'ordinateur de poche (105h) comprend des moyens pour invalider sélectivement le circuit de commande (205e).

4. Système modulaire de traitement de données (100) selon la revendication 3, dans lequel l'ordinateur de poche (105h) comprend en outre une batterie (285) pour constituer une alimentation interne (Vdd) et des moyens pour recevoir une alimentation externe (Vcc), quand l'alimentation externe est reçue, le circuit de traitement (205h) et le circuit de commande (205e) étant alimentés par l'alimentation externe et, quand l'alimentation externe n'est pas reçue, le circuit de traitement (205h) étant alimenté par l'alimentation interne et le circuit de commande (205e) n'étant pas alimenté.

5. Système modulaire de traitement de données (100) selon la revendication 4, dans lequel le dispositif d'extension (105e) comprend en outre des moyens (150) pour fournir l'alimentation externe (Vcc) à partir d'une source externe et le système comprend en outre des moyens (140p, 180p) pour transmettre l'alimentation externe depuis le dispositif d'extension vers l'ordinateur de poche dans l'état étendu.

6. Système modulaire de traitement de données (100) selon l'une quelconque des revendications 1 à 5, dans lequel le circuit de traitement (205h) comprend une première pluralité de modules (215-242) connectés à un premier bus de communication (210h) et le circuit de commande (205e) comprend une pluralité de seconds modules (250-275) connectés à un second bus de communication (210e), l'ordinateur de poche (105h) comprenant en outre des moyens (245) pour établir une liaison entre le premier bus de communication et le second bus de communication.

7. Système modulaire de traitement de données (100) selon l'une quelconque des revendications 1 à 6, dans lequel les moyens (140s, 140p, 180s, 180p) pour coupler l'ordinateur de poche (105h) au dispositif d'extension (105e) comprennent un unique premier connecteur (140s) pour transmettre des informations entre le circuit de commande (205e) et le dispositif d'extension (105e) et une pluralité de seconds connecteurs (183) dont chacun est destiné à transmettre les informations entre le premier connecteur et un périphérique interne correspondant (160-165).

8. Système modulaire de traitement de données (100) selon l'une quelconque des revendications 1 à 7, dans lequel les moyens (140s, 140p, 180s, 180p) pour coupler l'ordinateur de poche (105h) au dispositif d'extension (105e) incluent des modules de télécommunication (125, 127).

9. Ordinateur de poche (105h) destiné à être utilisé dans un système modulaire de traitement de données (100) comprenant des moyens (140s, 140p, 180s, 180p) pour coupler l'ordinateur de poche à un dispositif d'extension (105e) de façon amovible, le dispositif d'extension incorporant au moins un périphérique interne (160-165) sans aucun contrôleur, dans lequel l'ordinateur de poche incorpore un circuit de commande (205e) incluant une pluralité de contrôleurs (250-260) pour ledit au moins un périphérique interne et un circuit de traitement (205h) couplé au circuit de commande, dans un état de fonctionnement mobile dans lequel l'ordinateur de poche n'est pas couplé au dispositif d'extension, le circuit de traitement commandant le fonctionnement de l'ordinateur de poche et, dans un état de fonctionnement étendu dans lequel l'ordinateur de poche est couplé au dispositif d'extension, le circuit de traitement commandant le fonctionnement d'un ordinateur personnel ayant une unité centrale formée par l'ordinateur de poche et le dispositif d'extension.

10. Dispositif d'extension (105e) destiné à être utilisé dans un système modulaire de traitement de données (100), incorporant au moins un périphérique interne (160-165) sans aucun contrôleur, et incluant des moyens (140s, 140p, 180s, 180p) pour coupler un ordinateur de poche (105h) au dispositif d'extension de façon amovible, dans lequel l'ordinateur de poche incorpore un circuit de commande (205e) incluant une pluralité de contrôleurs (250-260) pour ledit au moins un périphérique interne et un circuit de traitement (205h) couplé au circuit de commande, dans un état de fonctionnement mobile dans lequel l'ordinateur de poche n'est pas couplé au dispositif d'extension, le circuit de traitement commandant le fonctionnement de l'ordinateur de poche et, dans un état de fonctionnement détendu dans lequel l'ordinateur de poche est couplé au dispositif d'extension, le circuit de traitement commandant le fonctionnement d'un ordinateur personnel ayant une unité centrale formée par l'ordinateur de poche et le dispositif d'extension.
